# EUROPEAN PATENT SPECIFICATION

(11) **EP 4 354 286 B1**
(45) Date of publication and mention of the grant of the patent: **31.12.2025**
(21) Application number: 22848320.2
(22) Date of filing: 18.07.2022
(51) Int. Cl.: G06F 9/445, G06F 8/61, H04L 67/06, G06F 9/54

(54) **RAPID APPLICATION PROCESSING METHOD, ELECTRONIC DEVICE AND RAPID APPLICATION SYSTEM**
SCHNELLES ANWENDUNGSVERARBEITUNGSVERFAHREN, ELEKTRONISCHE VORRICHTUNG UND SCHNELLES ANWENDUNGSSYSTEM
PROCÉDÉ DE TRAITEMENT D'APPLICATION RAPIDE, DISPOSITIF ÉLECTRONIQUE ET SYSTÈME D'APPLICATION RAPIDE

(30) Priority: 30.07.2021 CN 202110873293
(43) Date of publication of application: 17.04.2024
(73) Proprietor: Petal Cloud Technology Co., Ltd., Dongguan, Guangdong 523799 (CN)
(72) Inventor: WANG, Baoyuan, Shenzhen, Guangdong 518129 (CN)
(74) Representative: Gill Jennings & Every LLP
(86) International application number: PCT/CN2022/106303
(87) International publication number: WO 2023/005715

(56) References cited:
- WO-A1-2021/057390
- CN-A- 110 442 811
- CN-A- 111 052 072
- CN-A- 112 114 808
- CN-A- 112 114 808
- CN-A- 112 650 540
- US-A1- 2021 191 996

## Description

This application claims priority to Chinese Patent Application No. 202110873293.4, filed with the China National Intellectual Property Administration on July 30, 2021 and entitled "QUICK APPLICATION PROCESSING METHOD, ELECTRONIC DEVICE, AND QUICK APPLICATION SYSTEM".

### TECHNICAL FIELD

This application relates to the field of communication technologies, and in particular, to a quick application processing method, an electronic device, and a quick application system.

### BACKGROUND

A quick application is a new application form launched by a quick application alliance including Chinese mainstream vendors. The quick application has advantages of "free-installation" and "click-to-run". A terminal device may download an application package from a server when a quick application needs to be started, then directly runs the application package, and opens an application interface.

In consideration of a fact that application packages of some quick applications are large in size, and users do not use all pages when using the quick applications, to improve a speed of opening a page of the quick application, the quick application alliance provides a subpackaging solution. Through the subpackaging solution, an application program of the quick application may be packaged into one basic package and a plurality of subpackages. In other words, the application package may include the basic package and the plurality of subpackages. When the quick application is large in size, a subpackage loading function of the quick application may be used. The basic package and a subpackage in which a page is located are downloaded first, and then the downloaded basic package and the subpackage are run to display the corresponding page.

However, currently, a process from tapping the quick application by the user to finally displaying the corresponding page still takes a long time.

Document US 2021/0191996 A1 forms part of the background art and discloses a method for displaying an application page. The method includes: receiving an instruction of opening an application page, the instruction carrying an application identifier corresponding to an application; sending the application identifier to a server, and receiving and caching a configuration file returned from the server; receiving a view operation instruction sent by the server; and displaying the application page according to the view operation instruction and the configuration file.

### SUMMARY

**In** view of this, this application provides a quick application processing method, an electronic device, and a quick application system, to improve a page display speed of a quick application, and improve user experience.

To achieve the foregoing objective, according to a first aspect, an embodiment of this application provides a quick application processing method to improve a page display speed of a quick application. The method is applied to a terminal device and includes:
in response to a page opening operation on a target quick application, sending a preprocessed-data request to a server;
receiving preprocessed data returned by the server, where the preprocessed data includes an execution result of a target script file, and the target script file is a script file corresponding to a target page in the target quick application;
sending an application package download request corresponding to the target quick application to the server;
receiving an application package that is of the target quick application and that is returned by the server;
generating and displaying the target page based on the preprocessed data; and
when the preprocessed data does not exist in the server, generating and displaying the target page of the target quick application based on the application package of the target quick application.

According to the quick application processing method provided in this embodiment, the script file of the target page in the target quick application is run in advance on the server. After receiving the page opening operation of a user on the target quick application, the terminal device may obtain, from the server, the execution result of the script file corresponding to the target page, and display a home page of the target quick application based on the execution result. In this way, page display processing processes in the terminal device can be reduced, and a page display speed of the quick application can be improved.

In a possible implementation of the first aspect, the execution result includes a first instruction and a second instruction. The first instruction is an execution result corresponding to an executed script instruction in the target script file. The second instruction is a to-be-executed script instruction in the target script file.

The generating and displaying the target page based on the preprocessed data includes:
executing the second instruction through a script engine, to obtain a third instruction; and
generating and displaying the target page according to the first instruction and the third instruction.

In the foregoing implementation, a script instruction that needs to be run by the terminal device is reserved in the execution result. When generating the target page based on the execution result, the terminal device may find the to-be-executed script instruction (namely, the second instruction) in time based on the execution result, so that in a process of generating the target page, the second instruction may be executed through the script engine while the page is drawn according to the first instruction. In this way, a display speed of the target page can be improved.

In a possible implementation of the first aspect, an input parameter in the second instruction includes a device parameter of the terminal device and/or running data provided by a third-party server corresponding to the target quick application.

In a possible implementation of the first aspect, the second instruction includes a to-be-executed tag. When the to-be-executed tag is detected, the terminal device executes, through the script engine, the second instruction corresponding to the detected to-be-executed tag.

In the foregoing implementation, the second instruction includes the to-be-executed tag. The second instruction may be quickly detected by the terminal device based on the to-be-executed tag, so that a processing speed can be improved.

In a possible implementation of the first aspect, when the preprocessed data exists in the server, the preprocessed-data request is sent to the server. In this way, communication resources can be reduced.

In a possible implementation of the first aspect, the target page is the home page of the target quick application. In this way, communication resources of the terminal device can be reduced.

In a possible implementation of the first aspect, the method further includes:
sending an application package download request corresponding to the target quick application to the server;
receiving an application package that is of the target quick application and that is returned by the server; and
when the preprocessed data does not exist in the server, generating and displaying the home page of the target quick application based on the application package of the target quick application.

In the foregoing implementation, after receiving the page opening operation, the terminal device further downloads, from the server, the application package corresponding to the target quick application. In this way, if the preprocessed data of the target quick application does not exist in the server, the terminal device may obtain the application package of the target quick application in time, generate the home page of the target quick application based on the application package, and display the home page of the target quick application as soon as possible. In addition, the terminal device may also pre-obtain a script file of a page other than the home page for pre-loading, so that a display speed of the page of the target quick application other than the home page can be improved.

In a possible implementation of the first aspect, the terminal device determines, based on a quick application list preprocessing result, whether the preprocessed data exists in the server, and the quick application list preprocessing result is obtained by the terminal device from the server.

The quick application list preprocessing result includes a preprocessing result of at least one quick application, and a preprocessing result of each quick application indicates whether an execution result of a script file corresponding to a home page of the quick application exists in the server.

In the foregoing implementation, the terminal device may pre-learn, through the quick application list preprocessing result, whether the preprocessed data of the target quick application exists in the server, and does not need to send a consultation request to the server to learn whether the preprocessed data of the target quick application exists in the server. In this way, the processing speed can be improved.

In a possible implementation of the first aspect, when the target quick application is started for the first time, the preprocessed-data request is sent to the server.

In the foregoing implementation, the terminal device may download the preprocessed data of the target quick application from the server only when the target quick application is started for the first time. When the quick application is not started for the first time, the terminal device may extract the preprocessed data of the target quick application from a cache, and does not request the server, so that communication resources can be reduced.

In a possible implementation of the first aspect, the preprocessed data further includes a common resource file in the application package of the target quick application. In this way, the terminal device can obtain the common resource file from the preprocessed data as soon as possible, and generate and display the target page based on the execution result of the script file of the target page and the common resource file, so that the page display speed of the target page can be improved.

According to a second aspect, an embodiment of this application provides a quick application processing method to improve a page display speed of a quick application. The method is applied to a server and includes:
receiving a preprocessed-data request that corresponds to a target quick application and that is sent by a terminal device;
returning preprocessed data corresponding to the preprocessed-data request to the terminal device, where the preprocessed data includes an execution result of a target script file, and the target script file is a script file corresponding to a target page;
receiving an application package download request sent by the terminal device;
returning the application package corresponding to the application package download request to the terminal device, such that
the target page is generated and displayed by the terminal device based on the preprocessed data; and
when the preprocessed data does not exist in the server, the target page of the target quick application is generated and displayed by the terminal device based on the application package of the target quick application.

According to the quick application processing method provided in this embodiment, a server may execute the target script file of the target quick application in advance, and provide the execution result of the target script file to the terminal device. In this way, the terminal device can display a home page of the target quick application based on the execution result, so that page display processing processes in the terminal device can be reduced, and a page display speed of the quick application can be improved.

In a possible implementation of the second aspect, the execution result includes a first instruction and a second instruction. The first instruction is an execution result corresponding to an executed script instruction in the target script file. The second instruction is a to-be-executed script instruction in the target script file.

In the foregoing implementation, the server reserves, in the execution result, a script instruction that needs to be run by the terminal device. In this way, when generating the target page based on the execution result, the terminal device may find the to-be-executed script instruction (namely, the second instruction) in time, so that in a process of generating the target page, the second instruction may be executed through a script engine while the page is drawn according to the first instruction. In this way, a display speed of the target page can be improved.

In a possible implementation of the second aspect, an input parameter in the second instruction includes a device parameter of the terminal device and/or running data provided by a third-party server corresponding to the target quick application.

In a possible implementation of the second aspect, the second instruction includes a to-be-executed tag. The to-be-executed tag indicates that the second instruction is to be executed.

In the foregoing implementation, the to-be-executed tag is set in the second instruction, so that the second instruction can be quickly detected by the terminal device, and a processing speed can be improved.

In a possible implementation of the second aspect, before the receiving a preprocessed-data request that corresponds to a target quick application and that is sent by a terminal device, the method further includes:
determining the target script file based on an application package of the target quick application; and
executing the target script file through a script engine, to obtain the execution result of the target script file.

In the foregoing implementation, the server may pre-generate an execution result of the target script file, so that the target script file can be provided to the terminal device.

In a possible implementation of the second aspect, the method further includes:
receiving an application package download request sent by the terminal device; and
returning the application package corresponding to the application package download request to the terminal device.

In a possible implementation of the second aspect, the target page is the home page of the target quick application. In this way, processing resources and storage resources of the server can be reduced.

In a possible implementation of the second aspect, the method further includes:
sending a quick application list preprocessing result to the terminal device, where the quick application list preprocessing result includes a preprocessing result of at least one quick application, and a preprocessing result of each quick application indicates whether an execution result of a script file corresponding to a home page of the quick application exists in the server.

In the foregoing implementation, the server may provide the quick application list preprocessing result to the terminal device. In this way, the terminal device may pre-learn, through the quick application list preprocessing result, whether the preprocessed data of the target quick application exists in the server, and does not need to send a consultation request to the server to learn whether the preprocessed data of the target quick application exists in the server. In this way, the processing speed can be improved.

In a possible implementation of the second aspect, the preprocessed data further includes a common resource file in the application package of the target quick application.

According to a third aspect, an embodiment of this application provides a quick application processing apparatus. The apparatus is applied to a terminal device and includes:
an input module, configured to receive a page opening operation on a target quick application;
a communication module, configured to: in response to the page opening operation, send a preprocessed-data request to a server; receive preprocessed data returned by the server, where the preprocessed data includes an execution result of a target script file, and the target script file is a script file corresponding to a target page in the target quick application;
a processing module, configured to generate the target page based on the preprocessed data; and
a display module, configured to display the target page.

In a possible implementation of the third aspect, the execution result includes a first instruction and a second instruction. The first instruction is an execution result corresponding to an executed script instruction in the target script file. The second instruction is a to-be-executed script instruction in the target script file.

The processing module is specifically configured to:
execute the second instruction through a script engine, to obtain a third instruction; and
generate the target page according to the first instruction and the third instruction.

In a possible implementation of the third aspect, an input parameter in the second instruction includes a device parameter of the terminal device and/or running data provided by a third-party server corresponding to the target quick application.

In a possible implementation of the third aspect, the second instruction includes a to-be-executed tag. The processing module is specifically configured to: when the to-be-executed tag is detected, execute, through the script engine, the second instruction corresponding to the detected to-be-executed tag.

In a possible implementation of the third aspect, the communication module is specifically configured to: when the preprocessed data exists in the server, send the preprocessed-data request to the server.

In a possible implementation of the third aspect, the target page is a home page of the target quick application.

In a possible implementation of the third aspect, the communication module is further configured to:
send an application package download request corresponding to the target quick application to the server; and
receive an application package that is of the target quick application and that is returned by the server.

The processing module is specifically configured to: when the preprocessed data does not exist in the server, generate the home page of the target quick application based on the application package of the target quick application.

In a possible implementation of the third aspect, the processing module determines, based on a quick application list preprocessing result, whether the preprocessed data exists in the server. The quick application list preprocessing result is obtained from the server.

The quick application list preprocessing result includes a preprocessing result of at least one quick application. A preprocessing result of each quick application indicates whether an execution result of a script file corresponding to a home page of the quick application exists in the server.

In a possible implementation of the third aspect, the communication module is specifically configured to: when the target quick application is started for the first time, send the preprocessed-data request to the server.

According to a fourth aspect, an embodiment of this application provides a quick application processing method. The apparatus is applied to a server and includes:
a communication module, configured to receive a preprocessed-data request that corresponds to a target quick application and that is sent by a terminal device; and
a processing module, configured to determine preprocessed data corresponding to the preprocessed-data request.

The communication module is further configured to: return the preprocessed data to the terminal device, where the preprocessed data includes an execution result of a target script file, and the target script file is a script file corresponding to a target page.

In a possible implementation of the fourth aspect, the execution result includes a first instruction and a second instruction. The first instruction is an execution result corresponding to an executed script instruction in the target script file. The second instruction is a to-be-executed script instruction in the target script file.

In a possible implementation of the fourth aspect, an input parameter in the second instruction includes a device parameter of the terminal device and/or running data provided by a third-party server corresponding to the target quick application.

In a possible implementation of the fourth aspect, the second instruction includes a to-be-executed tag. The to-be-executed tag indicates that the second instruction is to be executed.

In a possible implementation of the fourth aspect, the processing module is further configured to:
before the communication module receives the preprocessed-data request that corresponds to the target quick application and that is sent by the terminal device, determine the target script file based on an application package of the target quick application; and
execute the target script file through a script engine, to obtain the execution result of the target script file.

In a possible implementation of the fourth aspect, the communication module is further configured to:
receive an application package download request sent by the terminal device; and
return the application package corresponding to the application package download request to the terminal device.

In a possible implementation of the fourth aspect, the target page is a home page of the target quick application.

In a possible implementation of the fourth aspect, the communication module is further configured to:
send a quick application list preprocessing result to the terminal device, where the quick application list preprocessing result includes a preprocessing result of at least one quick application, and a preprocessing result of each quick application indicates whether an execution result of a script file corresponding to a home page of the quick application exists in the server.

According to a fifth aspect, an embodiment of this application provides a quick application system, including a terminal device and a server.

The terminal device is configured to: in response to a page opening operation on a target quick application, send a preprocessed-data request to the server.

The server is configured to: receive the preprocessed-data request that corresponds to the target quick application and that is sent by the terminal device; and return preprocessed data corresponding to the preprocessed-data request to the terminal device. The preprocessed data includes an execution result of a target script file. The target script file is a script file corresponding to a target page.

The terminal device is further configured to: receive the preprocessed data returned by the server; and generate and display the target page based on the preprocessed data.

According to a sixth aspect, an embodiment of this application provides an electronic device, including a memory and a processor. The memory is configured to store a computer program. The processor is configured to perform the method according to the first aspect or the second aspect when invoking the computer program.

According to a seventh aspect, an embodiment of this application provides a computer-readable storage medium. The computer-readable storage medium stores a computer program. When the computer program is executed by a processor, the method according to the first aspect or the second aspect is implemented.

According to an eighth aspect, an embodiment of this application provides a computer program product. When the computer program product runs on a terminal device, the terminal device is enabled to perform the method according to the first aspect or the second aspect.

According to a ninth aspect, an embodiment of this application provides a chip system. The chip system includes a processor. The processor is coupled to a memory. The processor executes a computer program stored in the memory, to implement the method according to the first aspect or the second aspect. The chip system may be a single chip or a chip module including a plurality of chips.

It may be understood that, for beneficial effects of the fourth aspect to the ninth aspect, refer to related descriptions in the first aspect and the second aspect. Details are not described herein again.

### BRIEF DESCRIPTION OF DRAWINGS

FIG. 1 is a schematic diagram of a system architecture of a quick application system according to an embodiment of this application;
FIG. 2 is a schematic diagram of a quick application processing process according to an embodiment of this application;
FIG. 3 is a schematic flowchart of a preprocessing process according to an embodiment of this application;
FIG. 4(a) to FIG. 4(d) are schematic diagrams of quick application interfaces according to an embodiment of this application;
FIG. 5 is a schematic flowchart of a quick application display process according to an embodiment of this application;
FIG. 6 is a schematic flowchart of another quick application display process according to an embodiment of this application;
FIG. 7 is a schematic diagram of a structure of a quick application processing apparatus according to an embodiment of this application;
FIG. 8 is a schematic diagram of a structure of a terminal device according to an embodiment of this application; and
FIG. 9 is a schematic diagram of a structure of a server according to an embodiment of this application.

### DESCRIPTION OF EMBODIMENTS

The following describes embodiments of this application with reference to the accompanying drawings in embodiments of this application. Some terms used in embodiments of this application are used to merely explain the embodiments of this application, with no intention to limit this application.

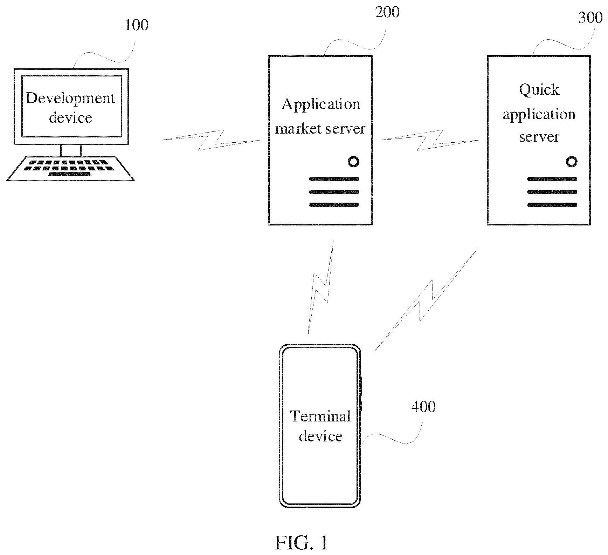

A system architecture related to embodiments of this application is first described. FIG. 1 is a schematic diagram of a system architecture of a quick application system according to an embodiment of this application. As shown in FIG. 1, the quick application system may include a development device 100, a server (including an application market server 200 and a quick application server 300), and a terminal device 400. The development device 100 may be an electronic device configured with an integrated development environment (integrated development environment, IDE), such as a notebook computer or a desktop computer. In FIG. 1, the desktop computer is used as an example for description.

The IDE is an application program used to provide a program development environment, and includes tools such as a code editor, a compiler, a debugger, and a graphical user interface. A quick application developer may write source code of a quick application through the IDE on the development device 100. After the quick application developer completes writing the source code of the quick application, the development device 100 may generate an application package of the quick application based on the source code, and upload the application package to a server for a user to download and use. A file format of the application package of the quick application is a quick application application package (runnable application package, RPK) format. Therefore, the application package of the quick application is also referred to as an RPK package.

The server may receive and store the RPK package uploaded by the development device 100, and provide an RPK package download service for the terminal device 400.

The terminal device 400 may be an electronic device that can support running of the quick application, such as a smartphone or a tablet computer. In FIG. 1, a smartphone is used as an example for description. The user may download the RPK package of the quick application from the server through the terminal device 400, to open the quick application.

The RPK package downloaded by the terminal device 400 from the server may be an entire package including all pages and resources of the quick application, or may be a subpackage including some pages and resources. In other words, the RPK package stored on the server may be the entire package without using a subpackaging function, or may be a subpackage formed by using the subpackaging function.

Specifically, the RPK package may include following files: a manifest file (manifest.json) used to describe project configuration information, an application code entry file app.ux, and a plurality of ux files that describe pages/customized components. When developing the quick application, the quick application developer may configure a subpackages rule in the manifest.json. During unpacking, the quick application developer may unpack a project into a plurality of subpackages according to the subpackages rule.

These subpackages may include one basic package and a plurality of page subpackages. The basic package includes some common pages and resources. The page subpackages are divided based on the subpackages rule. When the quick application is run, the basic package and a subpackage in which a page is located are loaded first. Other subpackages may be automatically pre-loaded in the background.

For example, a package of a quick application A is large in size. According to a specification of a quick application alliance, the package is divided into three packages. A home page and a common resource file are reserved in the basic package. A main interface is stored in a page subpackage PackageA, and a page other than the main interface is stored in a page subpackage PackageB. A directory file organization of the quick application A may be as follows:

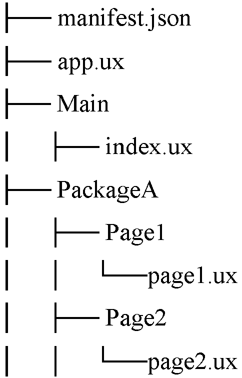

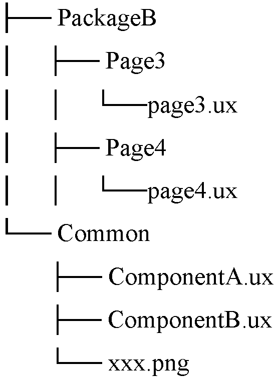

A Main directory stores a home page file. A Common directory stores a public resource file and a public component file (namely, the common resource file). Each page directory stores a private resource file and a private component file of each page.

A subpackage configuration rule in the manifest file (namely, the manifest.json) is as follows:

```
          "subpackages": [
            {
             "name": "pkgA",
             "resource": "PackageA"
            },
            {
             "name": "pkgB",
             "resource": "PackageB"
          ]
```

"name" indicates a name of the page subpackage, and "resource" indicates a resource directory of the page subpackage. During unpacking, all resources in the resource directory are packed into the page subpackage. The home page may be located in the basic package, or may be located in the page subpackage. In this embodiment, an example in which the home page is located in the basic package is used for description.

For an unpacking process, if the IDE on the development device 100 supports the subpackaging function, the quick application developer may package the page subpackage based on a resource path configured in the subpackages when compiling a quick application project, and package a directory other than a path configured in the subpackages into the basic package.

Some IDE versions may not support the subpackaging function. To facilitate quick application development for the quick application developer, the unpacking process may alternatively be performed on the server. That is, after receiving the RPK package uploaded by the development device 100, the server performs unpacking according to the subpackages rule in the RPK package, to obtain the subpackages.

In an actual application, the server may be a server that has both the download service and an unpacking function, or may include two servers shown in FIG. 1: One is an application market server 200 that provides the RPK package download service, and the other is a quick application server 300 that provides the unpacking function. In this embodiment, an example in which the unpacking process is performed in the server and the server includes the application market server 200 and the quick application server 300 is used for description subsequently.

It may be understood that the server may be an independent server, or may be a server cluster, that is, the foregoing server that has both the download service and the unpacking function, the application market server 200, and the quick application server 300 may all be server clusters.

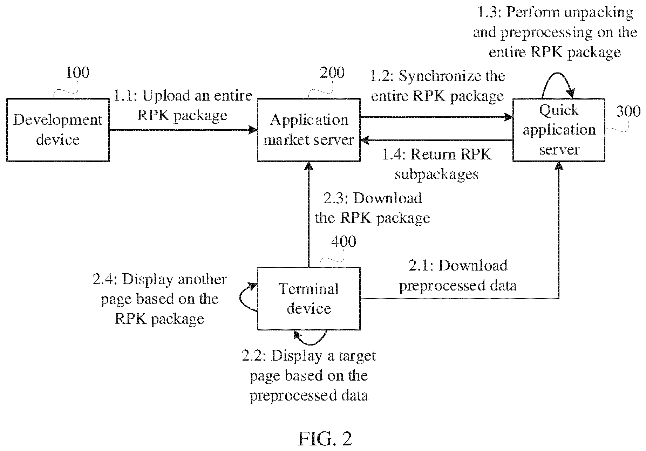

As shown in FIG. 2, a development device 100 may upload an entire RPK package developed by a quick application to an application market server 200 for review (step 1.1). After the review succeeds, the application market server 200 may synchronize the entire RPK package to a quick application server 300 (step 1.2). After receiving the entire RPK package, the quick application server 300 may perform unpacking on the entire RPK package (step 1.3). After the entire RPK package is unpacked into a plurality of subpackages, the plurality of RPK subpackages are returned to the application market server 200 (step 1.4).

When a user needs to open a target page of the quick application, a terminal device 400 may download an RPK package from the application market server 200, and the application market server 200 returns the RPK package to the terminal device 400. When the RPK package does not support subpackaging, the entire RPK package is returned. When the RPK package supports subpackaging, RPK subpackages (including a basic package of a home page) may be returned.

Specifically, the quick application may be an independent application, or may be a card embedded in another application. The user may start the quick application through a scenario entry, for example, a quick application center, a notification panel, leftmost screen, voice assistant, global search, a browser, an application market, or a native application embedded with the quick application. The quick application is run on a quick application engine. When the user starts the quick application through these scenario entries, the quick application engine is triggered. The quick application engine downloads a corresponding RPK package from the application market server 200 based on the quick application selected by the user.

Specifically, the quick application engine may include functional modules such as an application management module, a script engine, a rendering engine, and a layout engine. The quick application engine downloads the RPK package through the application management module. When downloading the RPK package, the quick application engine may alternatively obtain a download address from the application market server 200, and then download the corresponding RPK package from a download server based on the download address. The download server can provide a function of accelerated loading of the RPK package, and may specifically be a content delivery network (content delivery network, CDN) server or the like. For ease of description, in this embodiment, an example in which the quick application engine downloads the RPK package from the application market server 200 is used for description subsequently.

After obtaining the RPK package through the application management module, the quick application engine may find a script file of the target page, execute the script file of the target page through the script engine, convert an execution result of the script file into Android-layer components (such as a text component and a picture component) through the rendering engine, set attributes of these components, and calculate a relative position of each component through the layout engine to complete layout and drawing processes of the target page.

To improve a page display speed of the quick application, in this embodiment, the script file of the target page of the quick application may be run in advance on the quick application server 300. In other words, after receiving the entire RPK package, the quick application server 300 may further preprocess the entire RPK package (step 1.3). When the user needs to open the target page of the quick application, the terminal device 400 may directly download preprocessed data, namely, the execution result of the script file of the target page, from the quick application server 300 in response to a page opening operation of the user (step 2.1). Then, the target page is displayed based on the preprocessed data (step 2.2).

A script engine may be deployed on the quick application server 300, and the quick application server 300 may execute the script file through the script engine, to obtain the execution result of the script file.

The script file may be a JS (JavaScript) file. Correspondingly, the script engine may be a JS engine. V8 is a JavaScript running environment that may execute JS instructions. Node.js is a JavaScript running environment based on a V8 engine and may be run on the server. Therefore, in this embodiment, a script engine deployed on the terminal device 400 may be the V8 engine, and the script engine deployed on the quick application server 300 may be the Node.js.

It may be understood that the script file is not limited to the JS file. Correspondingly, the script engine is not limited to the JS engine. In addition, the JS engine is not limited to the V8 and the Node.js. Script engines specifically deployed on the terminal device 400 and the quick application server 300 are not particularly limited in this embodiment. For ease of understanding, in this embodiment, an example in which the script file is the JS file and the script engine is the JS engine is used for description subsequently.

When generating the target page, the terminal device 400 usually uses a common resource. Based on this, in this embodiment, the preprocessed data obtained by the quick application server 300 by preprocessing the RPK package may include not only the execution result of the script file of the target page, but also a common resource file in the RPK package. In this way, the terminal device 400 does not need to send a message again to request the common resource file, and may quickly obtain the common resource file based on the preprocessed data, and generate and display the target page based on the execution result of the script file of the target page and the common resource file. In this way, a page display speed of the target page can be improved.

The target page may be any page of the quick application. When the home page of the quick application is displayed, the RPK package of the quick application may be downloaded from the application market server 200 (step 2.3). After the home page is displayed, if the user taps another page, the terminal device 400 may display the another page in time based on the RPK package (step 2.4). In addition, the preprocessed data may not exist in the quick application. In this case, the terminal device 400 may also obtain the RPK package in time, and display the home page based on the RPK package.

For a page of the quick application other than the home page, when there is no subpackage, the entire RPK package of the quick application has been downloaded when the quick application is started, and does not need to be downloaded again when the page other than the home page is opened. In addition, a script file of the page other than the home page may be pre-loaded after the home page is displayed. When there is the subpackage, a subpackage of the page other than the home page may also be pre-loaded during loading of the home page. In other words, the page other than the home page may be pre-loaded. Therefore, in consideration of this case, in this embodiment, the quick application server 300 may perform preprocessing only on the home page, to reduce processing resources and storage resources. Correspondingly, the terminal device 400 may obtain only preprocessed data of the home page, so that communication resources can also be effectively reduced. In this embodiment, an example in which the target page is the home page is also used for description subsequently.

It may be understood that, when the quick application is started for the first time, the terminal device 400 may download an execution result of a script file of the home page from the quick application server 300 and store the execution result. When the quick application is not started for the first time, the terminal device 400 may extract the execution result of the script file of the home page from a cache, and does not need to request the quick application server 300 again, so that communication resources are reduced, and a display speed is improved. Unless otherwise specified, an example in which the quick application is started for the first time is used for description subsequently.

The following separately describes in detail a process related to preprocessing and a process related to home page display in the foregoing quick application processing method.

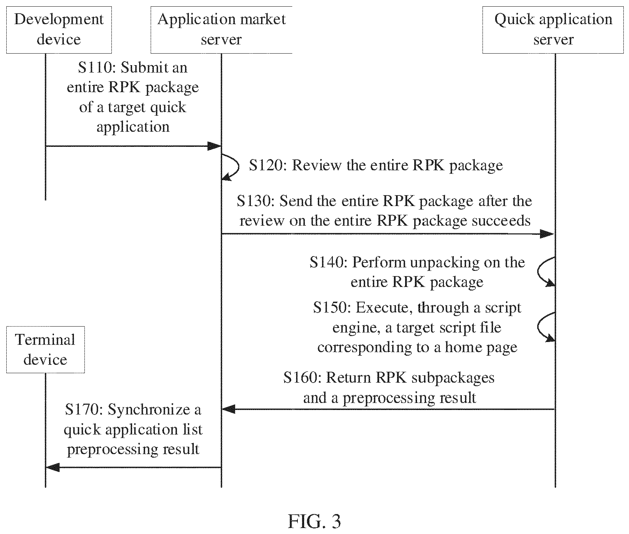

FIG. 3 is a schematic flowchart of a preprocessing process according to an embodiment of this application. As shown in FIG. 3, the preprocessing process may include the following steps.

S110: A development device submits an entire RPK package of a target quick application to an application market server.

Specifically, a quick application developer may develop the target quick application through an IDE on the development device according to a quick application specification, and compile and generate an RPK package (the entire RPK package is used as an example herein) of the target quick application. After test and verification are completed, the entire RPK package may be submitted to the application market server through the development device.

S120: After receiving the entire RPK package, the application market server reviews the entire RPK package.

After receiving the entire RPK package, the application market server may review the entire RPK package. Review content includes but is not limited to a content compliance check, a security check, and the like.

If the review on the entire RPK package succeeds, the application market server may send the entire RPK package to a quick application server. If the review on the entire RPK package fails, the application market server may return, to the development device, a message indicating that the review fails.

S130: The application market server sends the entire RPK package to the quick application server after the review on the entire RPK package succeeds.

S140: After receiving the entire RPK package, when the entire RPK package supports unpacking, the quick application server performs unpacking on the entire RPK package to obtain RPK subpackages.

Specifically, after receiving the entire RPK package, the quick application server may check, based on a manifest file in the entire RPK package, whether the entire RPK package supports unpacking.

If a subpackages rule is configured in the manifest file, in other words, if the entire RPK package supports unpacking, unpacking may be performed on the entire RPK package according to the subpackages rule to obtain the RPK subpackages.

If the subpackages rule is not configured in the manifest file, in other words, if the entire RPK package does not support unpacking, unpacking may not be performed.

S150: The quick application server determines a target script file corresponding to a home page in the entire RPK package, and executes the target script file through a script engine.

After receiving the entire RPK package, the quick application server further performs a preprocessing process of the target script file in addition to performing unpacking.

When the entire RPK package supports unpacking, the quick application server may find, from the RPK subpackages, a script file (namely, the target script file) corresponding to the home page of the target quick application. When the entire RPK package does not support unpacking, the quick application server may find the target script file from the entire RPK package.

Specifically, the quick application server may find, in the RPK package according to the quick application specification, an entry file in the manifest file: an entry page of a router node. For example, if the target quick application is the foregoing quick application A, content of a manifest file of the quick application A is as follows:

```
          {
              "package": "com.huawei.A", //Application package name
              "name": "A", //Application name
              ...//Other application descriptions, including an application icon, an application
              version number, system configuration information, and the like
              "router": {
                "entry": "Main", //Home page module
                "pages": {
                "Main": {
                   "component": "index", //Home page name
                   "path": "/Main" //Page path
          }
```

In the manifest file, the entry (an entry file of the quick application) is defined as Main. A script file of a home page of the quick application A may be found with reference to the foregoing directory file of the quick application A.

A file of the home page of the quick application A in an RPK has been packaged and compiled into a JS file named index.js. A compilation result is, for example, as follows:

```
          //Define a js function and execute the js function immediately
          (function (modules) {
            //Check whether the module is in a cache; and if the module is in the cache,
            directly return the module
            if (installedModules[moduleId]) {
              return installedModules[moduleId].exports;
            }
            //If the module is not in the cache, create a new module and place the new module
            into the cache
            var module = installedModules[moduleId] = {
              i: moduleId, //Define a module ID
              exports: {}
            };
            //Execute a function of the module
            modules[moduleId].call(module.exports,module,module.exports,_webpack_require_
            );
          })//Complete defining the function
          ({
          "2Pe5":(function (module, exports) {...})
          "8n5N":(function (module, exports) {...})
          ...
          })//Execute an input parameter
```

After finding the script file index.js, the quick application server may execute the file through a JS engine. During execution, a JS instruction related to interface layout is converted into a component tree, and a cascading style sheets (cascading style sheets, CSS) sample file of the component tree is converted into a specific value (for example, a ".title" style of an element is converted into "background-color: xxx, height: xxx, width: xxx"). After the execution, the JS engine stores an execution result on the quick application server.

An execution result of the target script file may be a JS object notation (JavaScript object notation, JSON) format, a text format, or the like. The execution result of the target script file is, for example, as follows:

```
          {
            "template": {
             /* Attribute and style of a root node*/
             "ref": "_root",
             "type": "div",
             "attr": {
               "designwidth": "device-width"
             },
             "style": {
               "width": "100%",
               "backgroundColor": "${$data.color}"
             },
             /* Attribute and style of a children node of the root node*/
            "children": [
                   {
                     "type": "text",
                     "attr": {
                       "value": "${$configuration.deviceInfo.windowLogicWidth}"
                     },
                     "style": {
                       "paddingLeft": "10dp",
                       "paddingRight": "10dp",
                       "paddingTop": "5dp",
                       "paddingBottom": "5dp",
                       "height": "100dp",
                       "backgroundColor":
          "${$configuration.deviceInfo.uiMode='dark'?'yellow':'red'}",
                       "fontSize": "${60*$configuration.deviceInfo.fontScale + 'dp'}"
                     }
               {...
             }]
          }
```

After executing the target script file, the JS engine forms the component tree based on a component relationship in the file. In the component tree, the root node (component) is of a div type, the children node (component) is of a text text, an attr label defines the attribute included in the component, and a style node defines the style of the component.

Some JS instructions in the target script file may need to be executed on a terminal device, for example, some data that needs to be obtained during running, such as a device parameter related to the terminal device and running data provided by a third-party server corresponding to the target quick application. For these instructions, a to-be-executed tag may be set in the execution result of the target script file. For example, in the foregoing execution result, "${}" indicates a to-be-executed JS instruction. In other words, preprocessed data of the target quick application may include an execution result (referred to as a first instruction herein) corresponding to an executed JS instruction in the target script file, and may further include the to-be-executed JS instruction (referred to as a second instruction herein) in the target script file.

It may be understood that the to-be-executed tag is not limited to the foregoing "${}", and another tag may also be used. This is not particularly limited in this embodiment.

The device parameter of the terminal device may include parameters such as a device position, a screen size, a font size, and a network. When the target quick application is run, some dynamic running data may be obtained from the third-party server. For example, for a news-type quick application, a third-party server corresponding to the news-type quick application may provide running data such as a news list and news content.

As shown in the foregoing execution result of the target script file, when the JS instruction ${$data.color} is executed, a background color of a component corresponding to the root node needs to be determined based on color data returned by the third-party server. Execution of the JS instruction ${$configuration.deviceInfo.windowLogicWidth} needs to be determined based on a window logical width of the terminal device. When the JS instruction ${$configuration.deviceInfo.uiMode='dark'?'yellow':'red'} is executed, whether a background color of a component corresponding to the children node is yellow or red needs to be determined based on a display mode of the terminal device. When the JS instruction ${60*$configuration.deviceInfo.fontScale + 'dp'} is executed, a font size of the component corresponding to the children node needs to be determined based on the font size of the terminal device.

In an actual application, usually, the JS instruction related to the interface layout (for example, a position relationship between components) on a quick application interface and a JS instruction corresponding to some invariable display content in a style file of each component may be directly executed on the quick application server, and some variable display content in the style file of each component needs to be determined when being run on the terminal device.

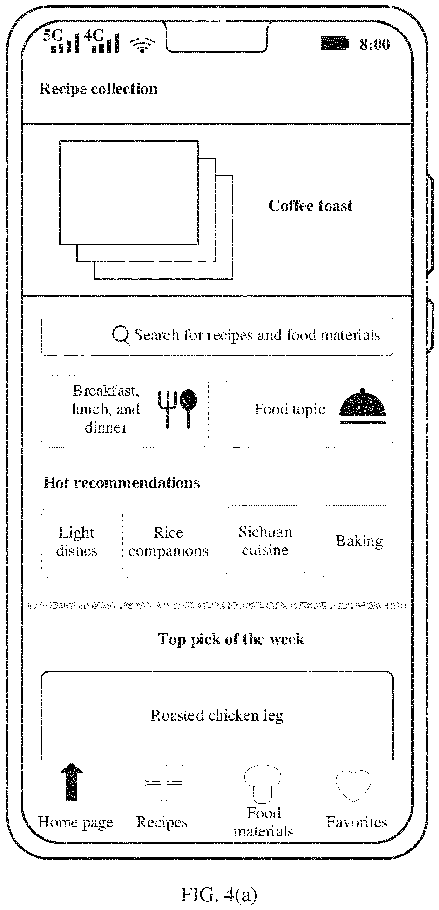

FIG. 4(a) to FIG. 4(d) are schematic diagrams of quick application interfaces according to an embodiment of this application. As shown in FIG. 4(a), for a quick application named "recipe collection", JS instructions corresponding to display content of an application name (namely, "recipe collection") on a home page of the quick application, a today's recommendation section, a search bar, a "breakfast, lunch, and dinner" section, a "food topic" section, a "hot recommendations" section, a "top pick of the week" section, a position relationship between navigation bars, a position relationship between recipe categories in the "hot recommendations" section, a position relationship between function menus in the navigation bar, an icon and text content corresponding to each function menu, a font color and a font type of each text, and a background color of each bar or section may be pre-executed on a quick application server.

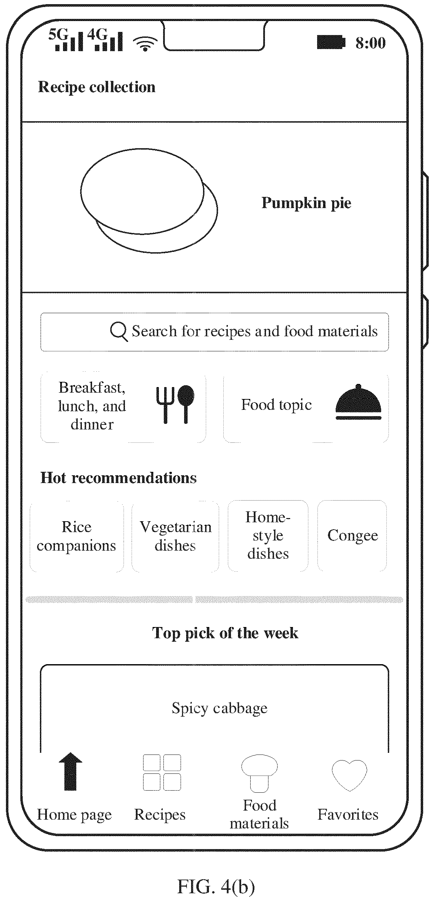

Content specifically displayed in the today's recommendation section, the "hot recommendations" section, and the "top pick of the week" section needs to be obtained from a third-party server corresponding to the quick application "recipe collection". In other words, the content is variable. For example, after the quick application "recipe collection" is opened one day, with reference to FIG. 4(a), a recipe recommended in the today's recommendation section is "coffee toast". Recipe categories recommended in the "hot recommendations" section include "light dishes", "rice companions", "sichuan cuisine", and "baking". A recipe displayed in the "top pick of the week" section is "roasted chicken leg". Another day, after the quick application "recipe collection" is opened, with reference to FIG. 4(b), a recipe recommended in the today's recommendation section is "pumpkin pie". Recipe categories recommended in the "hot recommendations" section include "rice companions", "vegetarian dishes", "home-style dishes", and "congee". A recipe displayed in the "top pick of the week" section is "spicy cabbage".

Correspondingly, JS instructions related to the foregoing variable display content may be executed on a terminal device, that is, to-be-executed tags may be set for the JS instructions corresponding to the content.

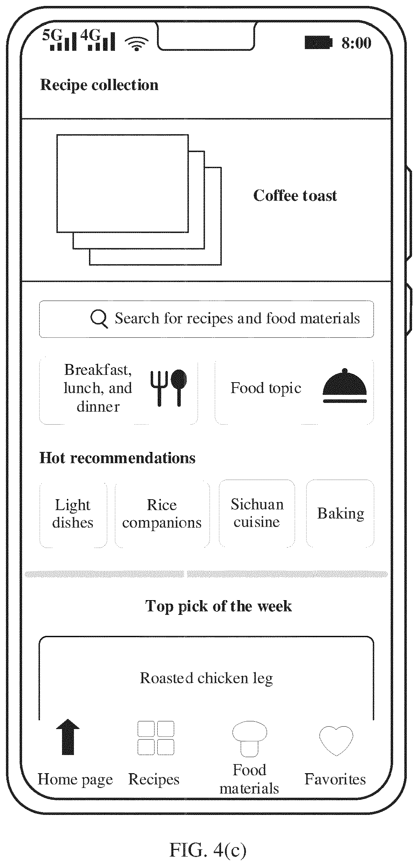

A display font size of the application name may be determined based on a font size set on the terminal device. Sizes and font sizes of content displayed in other bars or sections may be determined based on a window display size of the application on the terminal device. For example, when a font size set on the terminal device is a standard size, the font size of the application name "recipe collection" is shown in FIG. 4(a). When the font size set on the terminal device is a large font size, the font size of the application name "recipe collection" is shown in FIG. 4(c).

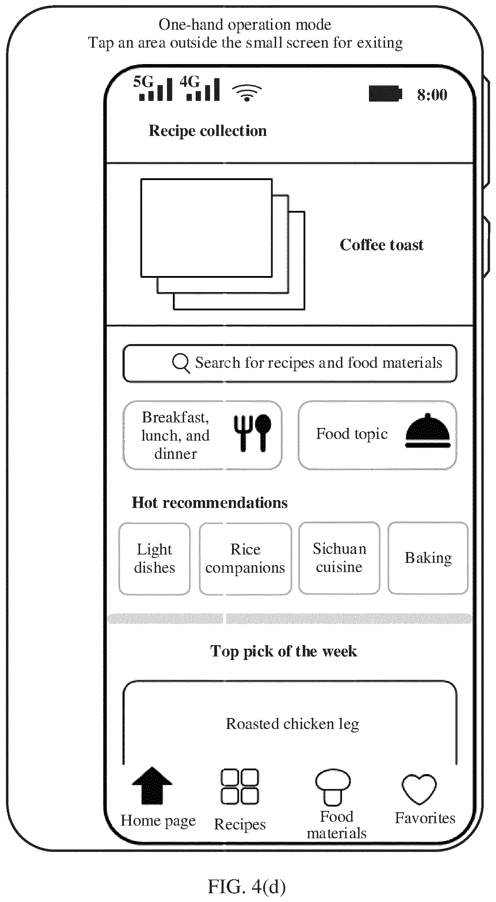

For another example, when the terminal device is displayed in full screen, display sizes of pictures and texts on a home page of the quick application "recipe collection" are shown in FIG. 4(a). When the terminal device is not displayed in full screen (for example, the terminal device is in a one-hand operation mode herein), the display sizes of the pictures and the texts on the home page of the quick application "recipe collection" are shown in FIG. 4(d).

Correspondingly, to-be-executed tags may be set for JS instructions related to the display sizes of the pictures and the texts, and the JS instructions are executed on the terminal device when the terminal device opens the quick application "recipe collection".

When preprocessing an RPK package, the quick application server may extract a common resource file in the RPK package, and combine an execution result of a target script file and the common resource file to obtain preprocessed data, so that the terminal device can obtain the common resource file in time, and generate and display a target page based on the common resource file and the execution result of the script file of the target page.

S 160: The quick application server returns RPK subpackages and a preprocessing result of a target quick application to an application market server.

After completing unpacking, the quick application server may return, to the application market server, each RPK subpackage obtained through unpacking.

The terminal device may open a quick application center. A user may select the target quick application from a quick application list provided by the quick application center, and open the target quick application. When opening the quick application center, the terminal device interacts with the application market server to obtain the quick application list. Based on this, in this embodiment, the quick application server may also return the preprocessing result of the target quick application to the application market server. In this way, the application market server may pre-synchronize a preprocessing result (referred to as a quick application list preprocessing result herein) of each quick application in the quick application center to the terminal device. When opening the target quick application, the terminal device may determine, based on the quick application list preprocessing result, whether the preprocessed data (namely, an execution result of a script file of a home page of the target quick application) of the target quick application exists in the quick application server. If the preprocessed data of the target quick application does not exist in the quick application server, the terminal device may not request the execution result from the quick application server, so that communication resources are reduced.

Specifically, the preprocessing result of the target quick application may indicate whether the execution result of the target script file exists in the target quick application, and may be indicated through a flag bit in a message. The quick application server may return the RPK subpackages and the preprocessing result of the target quick application to the application market server by carrying the RPK subpackages and the preprocessing result of the target quick application on a same message, or may return the RPK subpackages and the preprocessing result of the target quick application to the application market server through different messages.

The quick application list preprocessing result may include preprocessing results of all quick applications in the application market server, or may be set in a form similar to a trustlist and a blocklist, to include only a quick application list in which the preprocessed data exists, or include only a quick application list in which the preprocessed data does not exist. A specific implementation form of the quick application list preprocessing result is not particularly limited in this embodiment.

S170: The application market server synchronizes the quick application list preprocessing result to the terminal device.

Specifically, the application market server may synchronize the preprocessing result of each quick application in the quick application center to the terminal device each time the terminal device opens the quick application center, and may synchronize, when receiving a new preprocessing result, the preprocessing result to the terminal device. The terminal device may store and update the quick application list preprocessing result.

The following describes a process related to home page display.

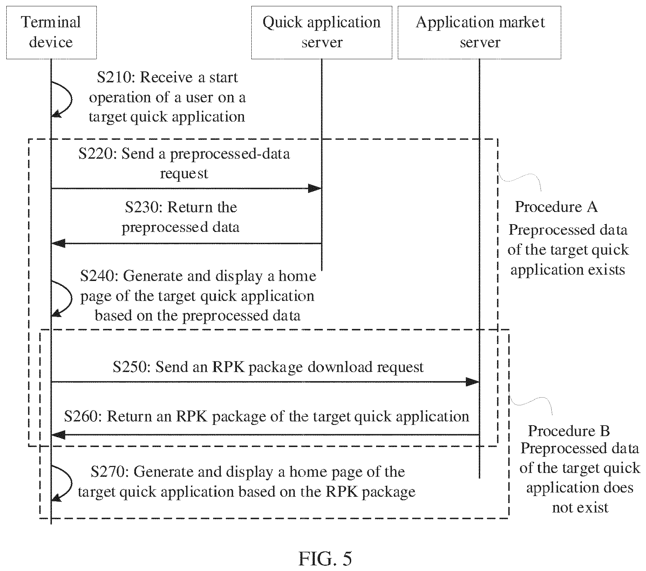

FIG. 5 is a schematic flowchart of a quick application display process according to an embodiment of this application. As shown in FIG. 5, the process may include the following steps.

S210: A terminal device receives a start operation of a user on a target quick application.

Specifically, the user may start the target quick application through various scenario entries of the quick application. The start operation may be a manual operation (for example, a tap operation), or may be a voice input operation.

After receiving the start operation of the user on the target quick application, the terminal device may respond to the operation, and download preprocessed data of the target quick application from a quick application server. In consideration of a fact that the preprocessed data of the target quick application may not exist in the quick application server, to save communication resources, in this embodiment, after receiving the start operation of the user on the target quick application, the terminal device may first determine, based on a quick application list preprocessing result, whether the preprocessed data of the target quick application exists in the quick application server, and download the preprocessed data from the quick application server when determining that the preprocessed data of the target quick application exists in the quick application server; otherwise, the terminal device may not request the preprocessed data from the quick application server.

Specifically, as shown in FIG. 5, when the preprocessed data of the target quick application exists in the quick application server, after receiving the start operation of the user on the target quick application, the terminal device performs a following procedure A (including steps S220 to S260). When the preprocessed data of the target quick application does not exist in the quick application server, the terminal device performs a procedure B (including steps S250 to S270).

S220: The terminal device sends a preprocessed-data request to the quick application server when the preprocessed data of the target quick application exists in the quick application server.

Specifically, after receiving the start operation of the user on the target quick application, if determining that the preprocessed data of the target quick application exists in the quick application server, the terminal device may send the preprocessed-data request corresponding to the target quick application to the quick application server, to request the preprocessed data of the target quick application.

The preprocessed-data request may include an identifier of the target quick application, for example, information that may uniquely identify the target quick application, such as a package name of the target quick application.

S230: The quick application server returns the preprocessed data to the terminal device.

After receiving the preprocessed-data request sent by the terminal device, the quick application server may search for, based on the identifier of the target quick application in the preprocessed-data request, the preprocessed data corresponding to the identifier, and then send the preprocessed data to the terminal device.

S240: The terminal device generates and displays a home page of the target quick application based on the preprocessed data.

After the terminal device receives the preprocessed data sent by the quick application server, a quick application engine in the terminal device may invoke a rendering engine to convert a first instruction (namely, an execution result corresponding to an executed JS instruction in a script file corresponding to the home page of the target quick application) in the preprocessed data into a native view (namely, an Android-layer component) for drawing. In a drawing process, if a second instruction (namely, a to-be-executed JS instruction in the script file corresponding to the home page of the target quick application) in the preprocessed data is found, a JS engine may be invoked to execute the second instruction, and then the native view is continuously drawn based on an execution result (referred to as a third instruction herein) of the second instruction. Finally, the native view is rendered into a native interface (namely, the home page of the target quick application) and displayed to the user.

The terminal device may detect a to-be-executed tag in the preprocessed data. If the to-be-executed tag is detected, a JS instruction corresponding to the detected to-be-executed tag is the second instruction.

It may be understood that, after the terminal device receives the preprocessed data, the quick application engine may first check whether the preprocessed data has the second instruction. If the preprocessed data has the second instruction, the JS engine may be first invoked to execute the second instruction, and then the rendering engine is invoked to draw and render the native view, to generate the native interface.

S250: The terminal device sends an RPK package download request to an application market server.

In this embodiment, after receiving the start operation of the user on the target quick application, the terminal device may further send, in response to the operation, the RPK package download request corresponding to the target quick application to the application market server. In this way, if the preprocessed data of the target quick application does not exist in the quick application server, the terminal device may obtain an RPK package of the target quick application in time, generate the home page of the target quick application based on the RPK package, and display the home page of the target quick application as soon as possible. In addition, the terminal device may also pre-obtain a script file of a page other than the home page for pre-loading, so that a display speed of the page of the target quick application other than the home page can be improved.

The RPK package download request may include the identifier of the target quick application, for example, the package name of the target quick application.

S260: The application market server returns the RPK package of the target quick application to the terminal device.

After receiving the RPK package download request sent by the terminal device, the application market server may search for, based on the identifier of the target quick application in the RPK package download request, the RPK package corresponding to the identifier, and then send the RPK package to the terminal device.

When the RPK package of the target quick application does not support subpackaging, the application market server may return the entire RPK package to the terminal device. When the RPK package of the target quick application supports subpackaging, the application market server may return RPK subpackages to the terminal device.

When returning the RPK subpackages to the terminal device, the application market server may first send a subpackage in which the home page is located, and then send a subpackage in which the page other than the home page is located, so that the terminal device receives the subpackage in which the home page is located as soon as possible. In this way, when the preprocessed data of the target quick application does not exist in the quick application server, the home page of the target quick application is generated as soon as possible based on the RPK package.

S270: When the preprocessed data of the target quick application does not exist in the quick application server, the terminal device generates and displays the home page of the target quick application based on the RPK package.

As described above, after receiving the start operation of the user, the terminal device may first determine, based on the quick application list preprocessing result, whether the preprocessed data of the target quick application exists in the quick application server. If the preprocessed data of the target quick application does not exist in the quick application server, after receiving the RPK package, the terminal device may generate and display the home page of the target quick application based on the RPK package. In other words, the quick application engine in the terminal device may first invoke the JS engine to execute a JS file of the home page; and then invoke the rendering engine to draw and render the native view based on an execution result of the JS file, to generate and then display the home page of the target quick application.

The following uses an example in which preprocessed data exists in a first quick application and preprocessed data does not exist in a second quick application to describe a quick application display process.

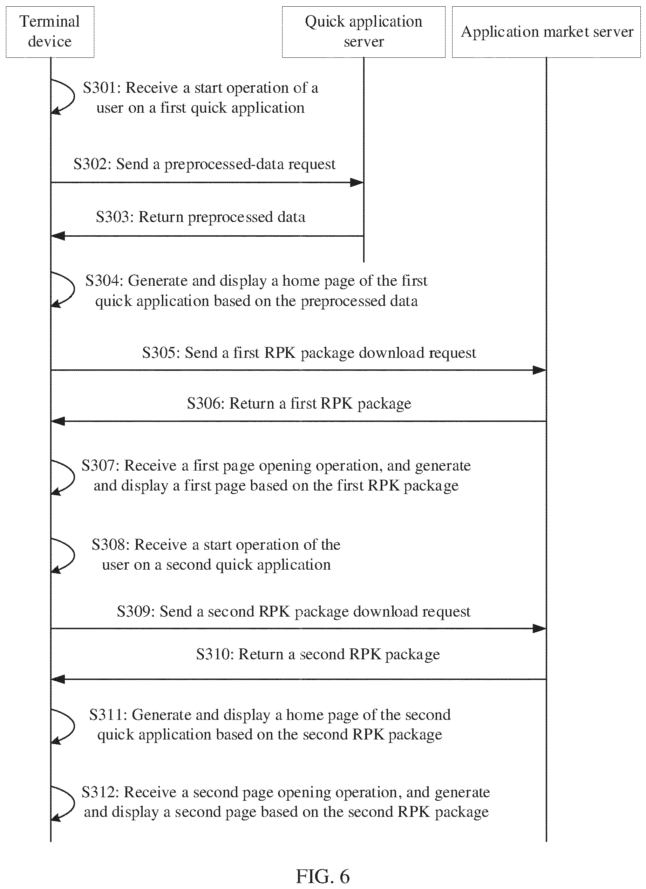

FIG. 6 is a schematic flowchart of another quick application display process according to an embodiment of this application. As shown in FIG. 6, the process may include the following steps.

S301: A terminal device receives a start operation of a user on a first quick application.

This step is similar to step S210. For specific descriptions, refer to the description of step S210. Details are not described herein again.

S302: The terminal device determines that preprocessed data of the first quick application exists in a quick application server, and sends a preprocessed-data request to the quick application server.

After receiving the start operation of the first quick application, the terminal device may respond to the operation, and determine, based on a quick application list preprocessing result, whether the preprocessed data of the first quick application exists in the quick application server. Herein, it is assumed that the preprocessed data exists in the first quick application, that is, the terminal device may determine, based on the quick application list preprocessing result, that the preprocessed data of the first quick application exists in the quick application server. In this case, the terminal device may send the preprocessed-data request corresponding to the first quick application to the quick application server, to request the preprocessed data of the first quick application.

S303: The quick application server returns the preprocessed data to the terminal device.

After receiving the preprocessed-data request sent by the terminal device, the quick application server may search for the corresponding preprocessed data based on the preprocessed-data request, and then send the preprocessed data to the terminal device.

S304: The terminal device generates and displays a home page of the first quick application based on the preprocessed data.

After receiving the preprocessed data sent by the quick application server, the terminal device may draw and render the page based on the preprocessed data, to obtain and then display the home page of the first quick application. A specific page display process is similar to step S240, and details are not described herein again.

S305: The terminal device sends, to an application market server, a first RPK package download request corresponding to the first quick application.

After receiving the start operation of the user on the first quick application, when responding to the operation, the terminal device may further send, to the application market server, the first RPK package download request corresponding to the first quick application, to download a first RPK package corresponding to the first quick application.

S306: The application market server returns the first RPK package to the terminal device.

This step is similar to step S260. For specific descriptions, refer to the description of step S260. Details are not described herein again.

S307: The terminal device receives a first page opening operation of the user, and generates and displays a first page based on the first RPK package.

After the terminal device opens the home page of the first quick application, the user may tap an entry of another page on the home page to open the another page (the first page is used as an example herein). After the terminal device receives the first page opening operation of the user, a quick application engine in the terminal device may invoke a JS engine to execute a JS file of the first page; and then invoke a rendering engine to draw and render a native view based on an execution result of the JS file, to generate and then display the first page.

It may be understood that, before receiving the first page opening operation, the terminal device may also pre-execute a JS file of another page (for example, the first page) that can be opened on the home page. After receiving the first page opening operation, the terminal device may directly draw and display the first page based on the execution result of the JS file of the first page, so that a page display speed of the first page can be improved.

S308: The terminal device receives a start operation of the user on a second quick application.

A plurality of quick applications may be started on the terminal device. The user may start the second quick application through a scenario entry of the quick application.

After receiving the start operation of the second quick application, the terminal device may respond to the operation, and determine, based on a quick application list preprocessing result, whether preprocessed data of the second quick application exists in the quick application server. Herein, it is assumed that the preprocessed data does not exist in the second quick application, that is, the terminal device may determine, based on the quick application list preprocessing result, that the preprocessed data of the second quick application does not exist in the quick application server. In this case, the terminal device does not need to request the preprocessed data of the second quick application from the quick application server, and subsequently displays a home page based on an RPK package.

S309: The terminal device sends, to the application market server, a second RPK package download request corresponding to the second quick application.

After receiving the start operation of the user on the second quick application, when responding to the operation, the terminal device may further send, to the application market server, the second RPK package download request corresponding to the second quick application, to download a second RPK package corresponding to the second quick application.

S310: The application market server returns the second RPK package to the terminal device.

This step is similar to step S260. For specific descriptions, refer to the description of step S260. Details are not described herein again.

S311: The terminal device determines that the preprocessed data of the second quick application does not exist in the quick application server, and generates and displays the home page of the second quick application based on the second RPK package.

As described above, after receiving the start operation of the user on the second quick application, the terminal device may determine that the preprocessed data of the target quick application does not exist in the quick application server. In this case, after receiving the second RPK package, the terminal device may generate and display the home page of the second quick application based on the second RPK package. That is, the quick application engine in the terminal device may first invoke the JS engine to execute a JS file of the home page in the second RPK package; and then invoke the rendering engine to draw and render a native view based on an execution result of the JS file, to generate and then display the home page of the second quick application.

S312: The terminal device receives a second page opening operation of the user, and generates and displays a second page based on the second RPK package.

After the terminal device opens the home page of the second quick application, if the user triggers the second page on the home page, after receiving the second page opening operation of the user, the terminal device may invoke the JS engine to execute a JS file of the second page; and then invoke the rendering engine to draw and render the native view based on an execution result of the JS file, to generate and display the second page. A specific page display process is similar to step S307, and details are not described herein again.

A person skilled in the art may understand that the foregoing embodiments are examples, but are not intended to limit this application. In a possible case, an execution sequence of one or more steps in the foregoing steps may be adjusted, or may be selectively combined to obtain one or more other embodiments. A person skilled in the art may select any combination of the foregoing steps according to a requirement, and any combination that does not depart from the essence of the solutions of this application shall fall within the protection scope of this application.

According to the quick application processing method provided in this embodiment, the script file of the home page of the target quick application may be run in advance on the quick application server. After receiving the start operation of the user on the target quick application, the terminal device may obtain, from the quick application server, the execution result of the script file corresponding to the home page of the target quick application, and display the home page of the target quick application based on the execution result, so that a page display speed of the quick application can be effectively improved.

Based on a same concept, as an implementation of the foregoing method, an embodiment of this application provides a quick application processing apparatus. The apparatus embodiment corresponds to the foregoing method embodiment. For ease of reading, details in the foregoing method embodiment are not described one by one in the apparatus embodiment. However, it should be clarified that the apparatus in this embodiment can correspondingly implement all content in the foregoing method embodiment.

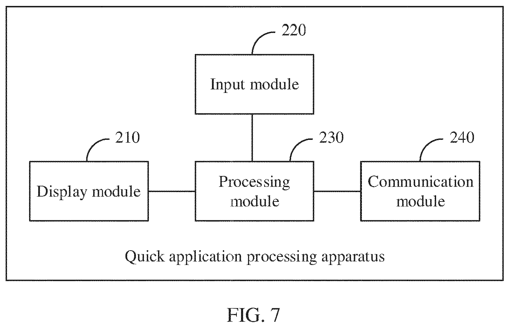

FIG. 7 is a schematic diagram of a structure of a quick application processing apparatus according to an embodiment of this application. As shown in FIG. 7, the apparatus provided in this embodiment includes:
a display module 210, an input module 220, a processing module 230, and a communication module 240.

It can be understood that the structure shown in this embodiment of this application does not constitute a specific limitation on the quick application processing apparatus. In some other embodiments of this application, the quick application processing apparatus may include more or fewer modules than those shown in the figure. The modules shown in the figure may be implemented in hardware, software, or a combination of software and hardware.

The display module 210 is configured to support an electronic device in performing an interface display operation in the foregoing embodiment and/or another process of the technology described in this specification. The display module may be a touchscreen, another hardware, or a combination of hardware and software.

The input module 220 is configured to receive input of a user on a display interface of the electronic device, for example, touch input, voice input, or gesture input. The input module is configured to support the electronic device in performing a step of receiving a call answering operation of the user in the foregoing embodiment and/or another process of the technology described in this specification. The input module may be a touchscreen, another hardware, or a combination of hardware and software.

The processing module 230 is configured to support the electronic device in performing a quick application processing operation in the foregoing embodiment and/or another process of the technology described in this specification.

The communication module 240 is configured to support the electronic device in performing an operation related to a communication process between the electronic device and another electronic device in the foregoing embodiment, and/or another process of the technology described in this specification.

The electronic device may be a terminal device or a server in the foregoing embodiment.

The apparatus provided in this embodiment can perform the foregoing method embodiment, and implementation principles and technical effects of the apparatus are similar and are not described herein again.

A person skilled in the art may clearly understand that for the purpose of convenient and brief descriptions, division into the foregoing functional unit or modules is merely used as an example for description. During actual application, the foregoing functions may be allocated to different functional unit or modules for implementation according to a requirement, that is, an internal structure of the apparatus is divided into different functional units or modules to implement all or some of the functions described above. Functional units or modules in the embodiments may be integrated into one processing unit, or each of the units may exist alone physically, or two or more units may be integrated into one unit. The integrated unit may be implemented in a form of hardware, or may be implemented in a form of a software function unit. In addition, specific names of the functional units or modules are merely for convenience of distinguishing from each other, and are not intended to limit the protection scope of this application. For specific working processes of units or modules in a system described above, refer to corresponding processes in the foregoing method embodiment. Details are not described herein again.

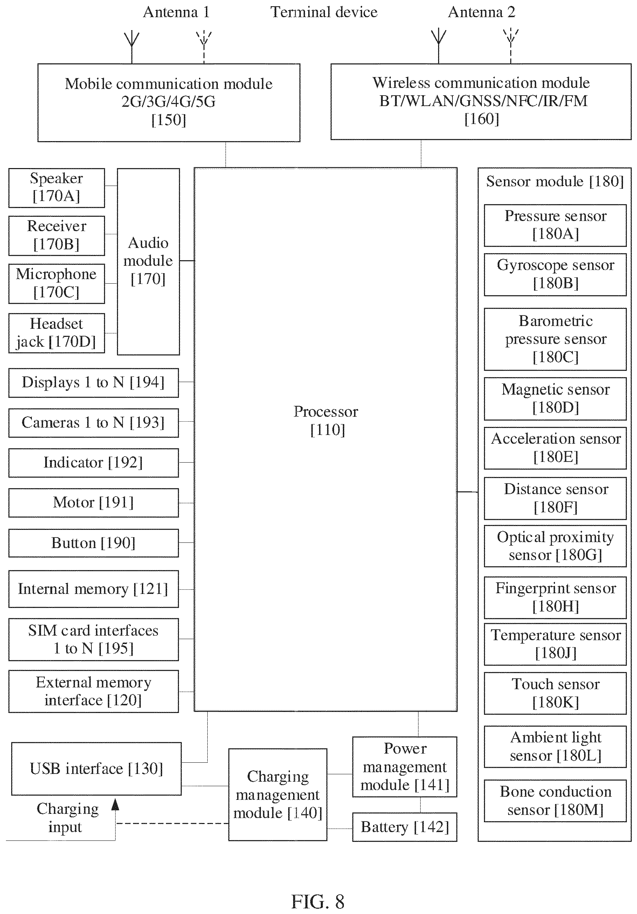

Based on a same concept, an embodiment of this application further provides a terminal device. FIG. 8 is a schematic diagram of a structure of the terminal device according to an embodiment of this application.

The terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, and an ambient light sensor 180L, a bone conduction sensor 180M, and the like.

It may be understood that the structure shown in this embodiment of this application does not constitute a specific limitation on the terminal device. In some other embodiments of this application, the terminal device may include more or fewer components than those shown in the figure, or some components may be combined, or some components may be split, or a different component arrangement may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated in one or more processors.

The controller may be a nerve center and a command center of the terminal device. The controller may generate an operation control signal based on an instruction operation code and a timing signal, to complete control on instruction fetching and execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The processor 110 may run software code/a module of a quick application processing method provided in this embodiment of this application, to generate and display a page of a quick application, and improve a page display speed of the quick application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). The I2S interface may be configured to perform audio communication. The PCM interface may also be configured to: perform audio communication, and sample, quantize, and encode an analog signal. The UART interface is a universal serial data bus, and is configured to perform asynchronous communication. The bus may be a two-way communication bus. The bus converts to-be-transmitted data between serial communication and parallel communication. The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. The GPIO interface may be configured by using software. The GPIO interface may be configured as a control signal or a data signal. The USB interface 130 is an interface that conforms to a USB standard specification, and may specifically be a mini USB interface, a micro USB interface, a USB Type-C interface, or the like. The USB interface 130 may be configured to connect to a charger to charge the terminal device, or may be configured to transmit data between the terminal device and a peripheral device, or may be configured to connect to a headset to play audio through the headset. The interface may also be configured to connect to another terminal device such as an AR device.

It can be understood that an interface connection relationship between the modules illustrated in this embodiment of this application is merely an example for description, and does not constitute a limitation on the structure of the terminal device. In some other embodiments of this application, the terminal device may alternatively use an interface connection manner different from that in the foregoing embodiment, or a combination of a plurality of interface connection manners.

The charging management module 140 is configured to receive a charging input from a charger. The charger may be a wireless charger or a wired charger. In some wired charging embodiments, the charging management module 140 may receive a charging input from the wired charger through the USB interface 130. In some embodiments of wireless charging, the charging management module 140 may receive a wireless charging input through a wireless charging coil of the terminal device. When charging the battery 142, the charging management module 140 may further supply power to the terminal device through the power management module 141.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may also be disposed in the processor 110. In some other embodiments, the power management module 141 and the charging management module 140 may also be disposed in a same device.

A wireless communication function of the terminal device may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the terminal device and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, the at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or a video through the display 194. In some embodiments, the modem processor may be a separate device. In some other embodiments, the modem processor may be independent of the processor 110, and is disposed in a same device as the mobile communication module 150 or another functional module.

The wireless communication module 160 may provide a wireless communication solution that is applied to the terminal device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal device is coupled to the mobile communication module 150, and the antenna 2 is coupled to the wireless communication module 160, so that the terminal device can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), the BT, the GNSS, the WLAN, the NFC, the FM, the IR technology, and/or the like. The GNSS may include a global positioning system (global positioning system, GPS), a global navigation satellite system (global navigation satellite system, GNSS), a Beidou navigation satellite system (Beidou navigation satellite system, BDS), a quasi-zenith satellite system (quasi-zenith satellite system, QZSS), and/or a satellite based augmentation system (satellite based augmentation system, SBAS).

The terminal device implements a display function through the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flexible light-emitting diode, FLED), a mini-LED, a micro-LED, a quantum dot light-emitting diode (quantum dot light-emitting diode, QLED), or the like. In some embodiments, the terminal device may include one or N displays 194, where N is a positive integer greater than 1.

The terminal device may implement a shooting function through the ISP, the camera 193, the video codec, the GPU, the display 194, the application processor, and the like.

The ISP is configured to process data fed back by the camera 193. The camera 193 is configured to capture a still image or a video. The digital signal processor is configured to process a digital signal, and may process another digital signal in addition to a digital image signal. The video codec is configured to compress or decompress a digital video.

The NPU is a neural-network (neural-network, NN) computing processor, and quickly processes input information by emulating a biological neural network structure, for example, by emulating a mode of transfer between human-brain neurons, and may further perform self-learning constantly. Applications such as intelligent cognition of the terminal device may be implemented through the NPU, for example, image recognition, facial recognition, speech recognition, and text understanding.

The internal memory 121 may be configured to store computer executable program code. The executable program code includes instructions. The processor 110 runs the instructions stored in the internal memory 121, to implement various function applications and data processing of the terminal device. The internal memory 121 may include a program storage area and a data storage area. The program storage area may store an operating system, an application required for at least one function (such as a sound play function and an image play function), and the like. The data storage area may store data (such as audio data and a phone book) created during use of the terminal device, and the like. In addition, the internal memory 121 may include a high-speed random access memory, or may include a nonvolatile memory, for example, at least one magnetic disk storage device, a flash memory device, or a universal flash storage (universal flash storage, UFS).

In this embodiment of this application, the internal memory 121 may store software code/a module of the quick application processing method provided in this embodiment of this application. When running the software code/module, the processor 110 may execute a procedure of the quick application processing method, to display the page of the quick application.

An external memory interface 120 may be configured to connect to an external memory, for example, a micro SD card, to extend a storage capability of the terminal device. An external memory card communicates with the processor 110 through the external memory interface 120, to implement a data storage function. For example, files such as music and videos are stored in the external storage card.

The software code/module of the quick application processing method provided in this embodiment of this application may also be stored in the external memory. The processor 110 may run the software code/module through the external memory interface 120, to execute the procedure of the quick application processing method, and display the page of the quick application.

The terminal device may implement audio functions such as music play and recording through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch-sensitive button. The terminal device may receive a button input, and generate a button signal input related to a user setting and function control of the terminal device. The motor 191 may generate a vibration alert. The motor 191 may be configured to provide an incoming call vibration alert and a touch vibration feedback. The indicator 192 may be an indicator, and may be configured to indicate a charging status and a power change, or may be configured to indicate a message, a missed call, a notification, and the like. The SIM card interface 195 is configured to connect to a SIM card. The SIM card may be inserted into the SIM card interface 195 or detached from the SIM card interface 195, to implement contact with or separation from the terminal device. The terminal device may support one or N SIM card interfaces, where N is a positive integer greater than 1. The SIM card interface 195 may support a nano-SIM card, a micro-SIM card, a SIM card, and the like.

The terminal device provided in this embodiment may perform the method embodiment. Implementation principles and technical effects of the terminal device are similar. Details are not described herein again.

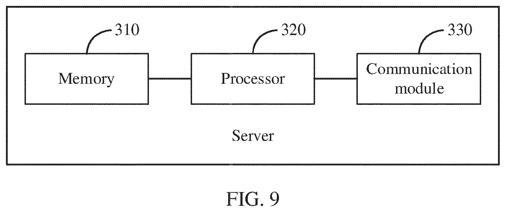

Based on a same concept, an embodiment of this application further provides a server. FIG. 9 is a schematic diagram of a structure of a server according to an embodiment of this application. As shown in FIG. 9, the server provided in this embodiment may include components such as a memory 310, a processor 320, and a communication module 330.

The memory 310 may be configured to store a computer program and a module. The processor 320 may perform, by running the computer program and the module stored in the memory 310, the method performed by a server in the foregoing method embodiment. The memory 310 may mainly include a program storage area and a data storage area. The program storage area may store an operating system, an application program required by at least one function (such as a sound play function and an image play function), and the like. The data storage area may store data (such as audio data and a phone book) created based on use of the server, and the like. In addition, the memory 310 may include a high-speed random access memory, or may include a non-volatile memory, for example, at least one magnetic disk storage device, a flash memory device, or other volatile solid-state storage devices.

The processor 320 is a control center of the server, connects various parts of the entire server through various interfaces and lines, and executes various functions and data processing of the server by running or executing a software program and/or a module stored in the memory 310 and invoking data stored in the memory 310, to perform overall monitoring on the server. Optionally, the processor 320 may include one or more processing units.

The communication module 330 may provide a communication solution that is applied to the server and that includes a wireless local area network (Wireless Local Area Network, WLAN) (for example, a Wi-Fi network), Bluetooth, ZigBee, a mobile communication network, a global navigation satellite system (global navigation satellite system, GNSS), frequency modulation (frequency modulation, FM), NFC, an infrared (infrared, IR) technology, and the like. The communication module 330 may be one or more devices integrating at least one communication processing module. The communication module 330 may include an antenna, and may receive an electromagnetic wave through the antenna, perform frequency modulation and filtering processing on an electromagnetic wave signal, and send a processed signal to the processor. The communication module 330 may further receive a to-be-sent signal from the processor 320, perform frequency modulation and amplification on the signal, and convert the signal into an electromagnetic wave for radiation through the antenna. The server may communicate with the terminal device through the communication module 330.

A person skilled in the art may understand that FIG. 9 is merely an example of the server, does not constitute a limitation on the server, and may include more or fewer components than those shown in the figure, or combine some components, or have different component arrangement.

The server includes two servers: One is an application market server that provides an RPK package download service, and the other is a quick application server that provides the unpacking function.

The server may be an independent server, or may be a server cluster, that is, the foregoing server that has both the download service and the unpacking function, the application market server, and the quick application server may all be server clusters.

The terminal device provided in this embodiment may perform the method embodiment. Implementation principles and technical effects of the terminal device are similar. Details are not described herein again.

An embodiment of this application further provides a computer-readable storage medium. The computer-readable storage medium stores a computer program. When the computer program is executed by a processor, the method in the foregoing method embodiment is implemented.

An embodiment of this application further provides a computer program product. When the computer program product runs on an electronic device, the electronic device is enabled to perform the method in the foregoing method embodiment.

An embodiment of this application further provides a chip system. The chip system includes a processor. The processor is coupled to a memory. The processor executes a computer program stored in the memory, to implement the method in the foregoing method embodiment. The chip system may be a single chip or a chip module including a plurality of chips.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instruction may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

A person of ordinary skill in the art may understand that all or some of the procedures of the methods in the foregoing embodiments may be implemented by a computer program by instructing related hardware. The program may be stored in a computer-readable storage medium. When the program is executed, the procedure in the foregoing method embodiment may be performed. The foregoing storage medium may include: any medium that can store program code, such as a ROM, a random access memory RAM, a magnetic disk, or an optical disc.

Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

In the foregoing embodiments, the description of each embodiment has respective focuses. For a part that is not described in detail or recorded in an embodiment, refer to related descriptions in other embodiments.

In the embodiments provided in this application, it should be understood that the disclosed apparatus/network and method may be implemented in other manners. For example, the described apparatus/device embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

It should be understood that, in descriptions of the specification and the appended claims of this application, the terms "include", "contain" and any other variants mean to cover a non-exclusive inclusion, for example, a process, method, system, product, or device that includes a series of steps or modules is not necessarily limited to those expressly listed steps or modules, but may include other steps or modules not expressly listed or inherent to such a process, method, product, or device.

In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural.

Moreover, in the descriptions of this application, unless otherwise specified, "a plurality of" means two or more than two. "At least one of the following" or a similar expression means any combination of these items, including any combination of a single item or a plurality of items. For example, at least one item of a, b, or c may indicate: a, b, c, a and b, a and c, b and c, or a, b, and c, where a, b, and c may be singular or plural.

As used in the specification of this application and the appended claims, the term "if" may be interpreted, depending on the context, as "when..." or "once" or "in response to determining" or "in response to detecting". Similarly, the phrases "if it is determined" or "if the [described condition or event] is detected" may be interpreted, depending on the context, as "once it is determined" or "in response to determining" or "once the [described condition or event] is detected" or "in response to detection of the [described condition or event]".

In addition, in the descriptions of the specification and the appended claims of this application, the terms "first", "second", "third", and the like are intended to distinguish between similar objects but do not necessarily indicate a specific order or sequence. It should be understood that the data termed in such a way are interchangeable in proper circumstances so that the embodiments described herein can be implemented in orders other than the order illustrated or described herein.

Reference to "an embodiment", "some embodiments", or the like described in the specification of this application indicates that one or more embodiments of this application include a specific feature, structure, or characteristic described with reference to the embodiments. Therefore, the phrases "in an embodiment," "in some embodiments," "in some other embodiments," "in another embodiment," and the like appearing in various places in this specification do not necessarily mean same embodiments, but mean "one or more but not all of embodiments" unless specifically emphasized otherwise.

## Claims

1. A quick application processing method to improve a page display speed of a quick application, applied to a terminal device, wherein the method comprises:
in response to a page opening operation on a target quick application (S210), sending a preprocessed-data request to a first server (S220);
receiving preprocessed data returned by the first server (S230), wherein the preprocessed data comprises an execution result of a target script file, and the target script file is a script file corresponding to a target page in the target quick application;
sending an application package download request corresponding to the target quick application to a second server (S250)
receiving an application package that is of the target quick application and that is returned by the second server (S260);
generating and displaying the target page based on the preprocessed data (S240); and
when the preprocessed data does not exist in the first server, generating and displaying the target page of the target quick application based on the application package of the target quick application (S270).

2. The method according to claim 1, wherein the execution result comprises a first instruction and a second instruction, the first instruction is an execution result corresponding to an executed script instruction in the target script file, and the second instruction is a to-be-executed script instruction in the target script file; and
the generating and displaying the target page based on the preprocessed data (S240) comprises:
executing the second instruction through a script engine, to obtain a third instruction; and
generating and displaying the target page according to the first instruction and the third instruction.

3. The method according to claim 2, wherein an input parameter in the second instruction comprises a device parameter of the terminal device and/or running data provided by a third-party server corresponding to the target quick application.

4. The method according to claim 2 or 3, wherein the second instruction comprises a to-be-executed tag, and when the to-be-executed tag is detected, the terminal device executes, through the script engine, the second instruction corresponding to the detected to-be-executed tag.

5. The method according to any one of claims 1 to 4, wherein when the preprocessed data exists in the first server, the preprocessed-data request is sent to the first server.

6. The method according to any one of claims 1 to 5, wherein the target page is a home page of the target quick application.

7. The method according to claim 1, wherein the terminal device determines, based on a quick application list preprocessing result, whether the preprocessed data exists in the first server, and the quick application list preprocessing result is obtained by the terminal device from the first server; and
the quick application list preprocessing result comprises a preprocessing result of at least one quick application, and a preprocessing result of each quick application indicates whether an execution result of a script file corresponding to a home page of the quick application exists in the first server.

8. A quick application processing method to improve a page display speed of a quick application, applied to a first server and a second server, wherein the method comprises:
receiving (S220), by the first server, a preprocessed-data request that corresponds to a target quick application and that is sent by a terminal device;
returning (S230), by the first server, preprocessed data corresponding to the preprocessed-data request to the terminal device, wherein the preprocessed data comprises an execution result of a target script file, and the target script file is a script file corresponding to a target page;
receiving (S250), by the second server, an application package download request sent by the terminal device;
returning (S260), by the second server, the application package corresponding to the application package download request to the terminal device, such that
the target page is generated and displayed by the terminal device based on the preprocessed data (S240); and
when the preprocessed data does not exist in the first server, the target page of the target quick application is generated and displayed by the terminal device based on the application package of the target quick application (S270).

9. The method according to claim 8, wherein the execution result comprises a first instruction and a second instruction, the first instruction is an execution result corresponding to an executed script instruction in the target script file, and the second instruction is a to-be-executed script instruction in the target script file.

10. The method according to claim 9, wherein an input parameter in the second instruction comprises a device parameter of the terminal device and/or running data provided by a third-party server corresponding to the target quick application.

11. The method according to any one of claims 8 to 10, wherein before the receiving a preprocessed-data request that corresponds to a target quick application and that is sent by a terminal device, the method further comprises:
determining the target script file based on an application package of the target quick application; and
executing the target script file through a script engine, to obtain the execution result of the target script file.

12. The method according to claim 8, wherein the method further comprises:
sending a quick application list preprocessing result to the terminal device, wherein the quick application list preprocessing result comprises a preprocessing result of at least one quick application, and a preprocessing result of each quick application indicates whether an execution result of a script file corresponding to a home page of the quick application exists in the first server.

13. The method according to any one of claims 1 to 12, wherein the first server is a quick application server, and the second server is an application market server.

14. An electronic device, comprising a memory and a processor, wherein the memory is configured to store a computer program, and the processor is configured to perform the method according to any one of claims 1 to 12 when invoking the computer program.

## Patentansprüche

1. Verfahren zur Schnellanwendungsverarbeitung, um eine Seitenanzeigegeschwindigkeit einer Schnellanwendung zu verbessern, das auf einem Endgerät angewendet wird, wobei das Verfahren Folgendes umfasst:
als Reaktion auf einen Seitenöffnungsvorgang in einer Zielschnellanwendung (S210), Senden einer Anforderung vorverarbeiteter Daten an einen ersten Server (S220);
Empfangen vorverarbeiteter Daten, die von dem ersten Server zurückgegeben werden (S230), wobei die vorverarbeiteten Daten ein Ausführungsergebnis einer Zielskriptdatei umfassen und die Zielskriptdatei eine Skriptdatei ist, die einer Zielseite in der Zielschnellanwendung entspricht;
Senden einer Download-Anforderung für ein Anwendungspaket, das der Zielschnellanwendung entspricht, an einen zweiten Server (S250) ;
Empfangen eines Anwendungspakets, das von der Zielschnellanwendung ist und von dem zweiten Server zurückgegeben wird (S260);
Generieren und Anzeigen der Zielseite basierend auf den vorverarbeiteten Daten (S240); und
wenn die vorverarbeiteten Daten auf dem ersten Server nicht vorhanden sind, Generieren und Anzeigen der Zielseite der Zielschnellanwendung basierend auf dem Anwendungspaket der Zielschnellanwendung (S270).

2. Verfahren nach Anspruch 1, wobei das Ausführungsergebnis eine erste Anweisung und eine zweite Anweisung umfasst, wobei die erste Anweisung ein Ausführungsergebnis ist, das einer ausgeführten Skriptanweisung in der Zielskriptdatei entspricht, und die zweite Anweisung eine auszuführende Skriptanweisung in der Zielskriptdatei ist; und
das Erzeugen und Anzeigen der Zielseite basierend auf den vorverarbeiteten Daten (S240) umfasst:
Ausführen der zweiten Anweisung durch eine Skript-Engine, um eine dritte Anweisung zu erlangen; und
Generieren und Anzeigen der Zielseite gemäß der ersten Anweisung und der dritten Anweisung.

3. Verfahren nach Anspruch 2, wobei ein Eingabeparameter in der zweiten Anweisung einen Geräteparameter des Endgeräts und/oder laufende Daten umfasst, die von einem Drittanbieterserver bereitgestellt werden und der Zielschnellanwendung entsprechen.

4. Verfahren nach Anspruch 2 oder 3, wobei die zweite Anweisung ein auszuführendes Tag umfasst und wenn das auszuführende Tag erkannt wird, das Endgerät über die Skript-Engine die zweite Anweisung ausführt, die dem erkannten auszuführenden Tag entspricht.

5. Verfahren nach einem der Ansprüche 1 bis 4, wobei, wenn die vorverarbeiteten Daten auf dem ersten Server vorhanden sind, die Anforderung vorverarbeiteter Daten an den ersten Server gesendet wird.

6. Verfahren nach einem der Ansprüche 1 bis 5, wobei die Zielseite eine Homepage der Zielschnellanwendung ist.

7. Verfahren nach Anspruch 1, wobei das Endgerät basierend auf einem Vorverarbeitungsergebnis einer Schnellanwendungsliste bestimmt, ob die vorverarbeiteten Daten in dem ersten Server vorhanden sind, und das Endgerät das Vorverarbeitungsergebnis einer Schnellanwendungsliste von dem ersten Server erhält; und das Vorverarbeitungsergebnis der Schnellanwendungsliste ein Vorverarbeitungsergebnis von mindestens einer Schnellanwendung umfasst und ein Vorverarbeitungsergebnis jeder Schnellanwendung angibt, ob ein Ausführungsergebnis einer Skriptdatei, die einer Homepage der Schnellanwendung entspricht, auf dem ersten Server vorhanden ist.

8. Verfahren zur Schnellanwendungsverarbeitung, um eine Seitenanzeigegeschwindigkeit einer Schnellanwendung zu verbessern, das auf einem ersten Server und einem zweiten Server angewendet wird, wobei das Verfahren umfasst:
Empfangen (S220), durch den ersten Server, einer Anforderung vorverarbeiteter Daten, die einer Zielschnellanwendung entspricht und von einem Endgerät gesendet wird;
Zurückgeben (S230), durch den ersten Server, vorverarbeiteter Daten, die der Anforderung vorverarbeiteter Daten entsprechen, an das Endgerät, wobei die vorverarbeiteten Daten ein Ausführungsergebnis einer Zielskriptdatei umfassen und die Zielskriptdatei eine Skriptdatei ist, die einer Zielseite entspricht;
Empfangen (S250), durch den zweiten Server, einer Download-Anforderung für ein Anwendungspaket, die durch das Endgerät gesendet wird;
Zurücksenden (S260), durch den zweiten Server, des Anwendungspakets, das der Download-Anforderung für ein Anwendungspaket entspricht, an das Endgerät, derart dass
die Zielseite von dem Endgerät basierend auf den vorverarbeiteten Daten generiert und angezeigt wird (S240); und wenn die vorverarbeiteten Daten auf dem ersten Server nicht vorhanden sind, die Zielseite der Zielschnellanwendung basierend auf dem Anwendungspaket der Zielschnellanwendung von dem Endgerät generiert und angezeigt wird (S270).

9. Verfahren nach Anspruch 8, wobei das Ausführungsergebnis eine erste Anweisung und eine zweite Anweisung umfasst, wobei die erste Anweisung ein Ausführungsergebnis ist, das einer ausgeführten Skriptanweisung in der Zielskriptdatei entspricht, und die zweite Anweisung eine auszuführende Skriptanweisung in der Zielskriptdatei ist.

10. Verfahren nach Anspruch 9, wobei ein Eingabeparameter in der zweiten Anweisung einen Geräteparameter des Endgeräts und/oder laufende Daten umfasst, die von einem Drittanbieterserver bereitgestellt werden und der Zielschnellanwendung entsprechen.

11. Verfahren nach einem der Ansprüche 8 bis 10, wobei das Verfahren vor dem Empfangen einer Anforderung vorverarbeiteter Daten, die einer Zielschnellanwendung entspricht und von einem Endgerät gesendet wird, ferner umfasst:
Bestimmen der Zielskriptdatei basierend auf einem Anwendungspaket der Zielschnellanwendung; und
Ausführen der Zielskriptdatei über eine Skript-Engine, um das Ausführungsergebnis der Zielskriptdatei zu erlangen.

12. Verfahren nach Anspruch 8, wobei das Verfahren ferner Folgendes umfasst:
Senden eines Vorverarbeitungsergebnisses einer Schnellanwendungsliste an das Endgerät, wobei das Vorverarbeitungsergebnis einer Schnellanwendungsliste ein Vorverarbeitungsergebnis von mindestens einer Schnellanwendung umfasst und ein Vorverarbeitungsergebnis jeder Schnellanwendung angibt, ob ein Ausführungsergebnis einer Skriptdatei, die einer Homepage der Schnellanwendung entspricht, auf dem ersten Server vorhanden ist.

13. Verfahren nach einem der Ansprüche 1 bis 12, wobei der erste Server ein Schnellanwendungsserver und der zweite Server ein Anwendungsmarktserver ist.

14. Elektronische Vorrichtung, umfassend einen Speicher und einen Prozessor, wobei der Speicher konfiguriert ist, um ein Computerprogramm zu speichern und der Prozessor konfiguriert ist, um das Verfahren nach einem der Ansprüche 1 bis 12 durchzuführen, wenn das Computerprogramm aufgerufen wird.

## Revendications

1. Procédé de traitement d'application rapide pour améliorer une vitesse d'affichage de page d'une application rapide, appliqué à un dispositif terminal, dans lequel le procédé comprend :
en réponse à une opération d'ouverture de page sur une application rapide cible (S210), l'envoi d'une demande de données prétraitées à un premier serveur (S220) ;
la réception de données prétraitées renvoyées par le premier serveur (S230), dans lequel les données prétraitées comprennent un résultat d'exécution d'un fichier de script cible, et le fichier de script cible est un fichier de script correspondant à une page cible dans l'application rapide cible ;
l'envoi d'une demande de téléchargement de package d'application correspondant à l'application rapide cible à un second serveur (S250)
la réception d'un package d'application qui est celui de l'application rapide cible et qui est renvoyé par le second serveur (S260) ;
la génération et l'affichage de la page cible sur la base des données prétraitées (S240) ; et
lorsque les données prétraitées n'existent pas dans le premier serveur, la génération et l'affichage de la page cible de l'application rapide cible sur la base du package d'application de l'application rapide cible (S270).

2. Procédé selon la revendication 1, dans lequel le résultat d'exécution comprend une première instruction et une deuxième instruction, la première instruction est un résultat d'instruction correspondant à une instruction de script exécutée dans le fichier de script cible, et la deuxième instruction est une instruction de script à exécuter dans le fichier de script cible ; et
la génération et l'affichage de la page cible sur la base des données prétraitées (S240) comprennent :
l'exécution de la deuxième instruction via un moteur de script, pour obtenir une troisième instruction ; et
la génération et l'affichage de la page cible selon la première instruction et la troisième instruction.

3. Procédé selon la revendication 2, dans lequel un paramètre d'entrée dans la deuxième instruction comprend un paramètre de dispositif du dispositif terminal et/ou des données de fonctionnement fournies par un serveur tiers correspondant à l'application rapide cible.

4. Procédé selon la revendication 2 ou 3, dans lequel la deuxième instruction comprend une balise à exécuter, et lorsque la balise à exécuter est détectée, le dispositif terminal exécute, via le moteur de script, la deuxième instruction correspondant à la balise à exécuter détectée.

5. Procédé selon l'une quelconque des revendications 1 à 4, dans lequel lorsque les données prétraitées existent dans le premier serveur, la demande de données prétraitées est envoyée au premier serveur.

6. Procédé selon l'une quelconque des revendications 1 à 5, dans lequel la page cible est une page d'accueil de l'application rapide cible.

7. Procédé selon la revendication 1, dans lequel le dispositif terminal détermine, sur la base d'un résultat de prétraitement de liste d'applications rapides, si les données prétraitées existent ou non dans le premier serveur, et le résultat du prétraitement de la liste d'applications rapides est obtenu par le dispositif terminal auprès du premier serveur ; et
le résultat de prétraitement de la liste d'applications rapides comprend un résultat de prétraitement d'au moins une application rapide, et un résultat de prétraitement de chaque application rapide indique si un résultat d'exécution d'un fichier de script correspondant à une page d'accueil de l'application rapide existe ou non dans le premier serveur.

8. Procédé de traitement d'application rapide pour améliorer une vitesse d'affichage de page d'une application rapide, appliqué à un premier serveur et à un second serveur, dans lequel le procédé comprend :
la réception (S220), par le premier serveur, d'une demande de données prétraitées qui correspond à une application rapide cible et qui est envoyée par un dispositif terminal ;
le renvoi (S230), par le premier serveur, de données prétraitées correspondant à la demande de données prétraitées au dispositif terminal, dans lequel les données prétraitées comprennent un résultat d'exécution d'un fichier de script cible, et le fichier de script cible est un fichier de script correspondant à une page cible ;
la réception (S250), par le second serveur, d'une demande de téléchargement de package d'application envoyée par le dispositif terminal ;
le renvoi (S260), par le second serveur, du package d'application correspondant à la demande de téléchargement de package d'application au dispositif terminal, de sorte que
la page cible est générée et affichée par le dispositif terminal sur la base des données prétraitées (S240) ; et
lorsque les données prétraitées n'existent pas dans le premier serveur, la page cible de l'application rapide cible est générée et affichée par le dispositif terminal sur la base du package d'application de l'application rapide cible (S270).

9. Procédé selon la revendication 8, dans lequel le résultat d'exécution comprend une première instruction et une deuxième instruction, la première instruction est un résultat d'exécution correspondant à une instruction de script exécutée dans le fichier de script cible, et la deuxième instruction est une instruction de script à exécuter dans le fichier de script cible.

10. Procédé selon la revendication 9, dans lequel un paramètre d'entrée dans la deuxième instruction comprend un paramètre de dispositif du dispositif terminal et/ou des données de fonctionnement fournies par un serveur tiers correspondant à l'application rapide cible.

11. Procédé selon l'une quelconque des revendications 8 à 10, dans lequel avant la réception d'une demande de données prétraitées qui correspond à une application rapide cible et qui est envoyée par un dispositif terminal, le procédé comprend également :
la détermination du fichier de script cible sur la base d'un package d'application de l'application rapide cible ; et
l'exécution du fichier de script cible via un moteur de script, pour obtenir le résultat d'exécution du fichier de script cible.

12. Procédé selon la revendication 8, dans lequel le procédé comprend également :
l'envoi d'un résultat de prétraitement de liste d'applications rapides au dispositif terminal, dans lequel le résultat de prétraitement de liste d'applications rapides comprend un résultat de prétraitement d'au moins une application rapide, et un résultat de prétraitement de chaque application rapide indique si un résultat d'exécution d'un fichier de script correspondant à une page d'accueil de l'application rapide existe ou non dans le premier serveur.

13. Procédé selon l'une quelconque des revendications 1 à 12, dans lequel le premier serveur est un serveur d'application rapide, et le second serveur est un serveur de marché d'applications.

14. Dispositif électronique, comprenant une mémoire et un processeur, dans lequel la mémoire est configurée pour stocker un programme informatique, et le processeur est configuré pour réaliser le procédé selon l'une quelconque des revendications 1 à 12 lorsqu'il invoque le programme informatique.
